(19) Europäisches Patentamt
European Patent Office
Office européen des brevets

(11) **EP 3 130 462 A1**

(12) **EUROPEAN PATENT APPLICATION**
published in accordance with Art. 153(4) EPC

(43) Date of publication:
**15.02.2017 Bulletin 2017/07**

(51) Int Cl.:
**B32B 27/32** (2006.01)    **B32B 3/30** (2006.01)
**B32B 27/36** (2006.01)    **B32B 33/00** (2006.01)
**E04F 13/07** (2006.01)

(21) Application number: **15764113.5**

(22) Date of filing: **17.03.2015**

(86) International application number:
**PCT/JP2015/057827**

(87) International publication number:
**WO 2015/141656 (24.09.2015 Gazette 2015/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **19.03.2014 JP 2014056894**

(71) Applicant: **Dai Nippon Printing Co., Ltd.
Tokyo-To (JP)**

(72) Inventors:
• **UENO, Masanori
Tokyo 162-8001 (JP)**
• **FUNABIKI,Chika
Tokyo 162-8001 (JP)**

(74) Representative: **Müller-Boré & Partner
Patentanwälte PartG mbB
Friedenheimer Brücke 21
80639 München (DE)**

(54) **DECORATIVE SHEET, AND DECORATIVE MEMBER IN WHICH SAME IS USED**

(57)      An object of the present invention is to provide a decorative sheet that makes it possible to satisfy the requirement for decreased thickness, and ensure superior molding processability and designability including external appearance (including the finished state) and texture (feel). The present invention relates to a decorative sheet, comprising a base sheet formed of a polyester resin or a polyolefin resin; and an ornamental layer and a surface-protecting layer provided on the base sheet in this order, the decorative sheet having a total thickness of 70 to 135 $\mu$m, at least the surface-protecting layer having recesses, the maximum depth of each recess being 15 to 100% based on the total thickness and not less than 15 $\mu$m, the ratio of a tensile elastic modulus at 120°C to a tensile elastic modulus at 20°C being 1:12 to 1:160, and the ratio of a maximum point load at 120°C to a maximum point load at 20°C upon 30-mm stretching being 1:1.7 to 1:30.

Fig. 1

**Description**

Technical Field

The present invention relates to a decorative sheet, and a decorative member produced by using a decorative sheet.

Background Art

A common technique for decorating architectural interior and exterior members, such as a wall, a ceiling, or a floor; or architectural fittings, such as a window frame, a door, a handrail, a baseboard, a cornice, or a molding, has been to use a decorative sheet (see, for example, Patent Document 1). Considering that decorative sheets are used to decorate complicated shapes, thinner decorative sheets are more advantageous in terms of processability. Further, for environmental benefits, the idea of recycling wooden base materials, resin base materials, and like members for constituting architectural interior and exterior members and architectural fittings is common. Also, to prevent a loss of recyclability, a decrease in thickness of decorative sheets as much as possible (provision of thin decorative sheets) is desired.

After a decorative sheet is adhered to a member (adherend) by lamination, wrapping, or the like, it is necessary to further process the decorative sheet, for example, by cutting. Generally, when decorative sheets are cut, heat may be generated in the decorative sheets due to friction. Further, depending on the type of adhesive used for the adhesion, heat may be generated (the temperature of the decorative sheet may be increased) upon lamination or wrapping, or upon V-grooving or assembly, of the decorative sheets. Further, the heat presumably remains in the decorative sheet when the decorative sheet is subjected to the finishing step. As described above, since decorative sheets are presumably often handled in a heated state or with some residual heat during the processing steps, they preferably have appropriate thermal characteristics. As a method for processing decorative sheets, vacuum forming has been known. Since decorative sheets are exposed to a heated and vacuum environment during vacuum forming, it is necessary for the decorative sheets to have appropriate mechanical characteristics (strength), in addition to thermal characteristics. Without these characteristics, the decorative sheet detaches from a member (adherend). Further, breaking, cracking, or wrinkling of the decorative sheet also occurs, thereby decreasing the molding processability; as a result, the designability of the resulting members, fittings, and the like is greatly deteriorated.

Further, in addition to ensuring designability in the finished state by preventing the breaking, cracking, or wrinkling of the sheet as described above, the expression of designability for the exterior appearance or the texture (feel) is also an important performance required for a decorative sheet. As a means for expressing such designability, a method for patterning the sheet by forming recesses on its surface, generally by embossing, has been used. When such a means for expressing designability is used for an overly thin decorative sheet, the decorative sheet fractures during the embossing. Also, when the decorative sheet is overly thin, the recesses formed by embossing protrude from the rear surface of the decorative sheet; as a result, when the decorative sheet is adhered to a member (adherend), the recesses of the finished plate are squashed.

Further, when the decorative sheet is adhered to a member (adherend), an adhesive may be applied to the decorative sheet in some cases so as to improve the adhesiveness between the decorative sheet and the member, and prevent the member (adherend) from damage. In this case, if a hot-melt adhesive is used as the adhesive, depending on the structure or material of the decorative sheet, the recesses formed by embossing may become shallow, or disappear.

Citation List

Patent Documents

Patent Document 1: JP2000-326451A

Summary of Invention

Technical Problem

Among known decorative sheets to be used for producing a decorative member, in particular, by lamination or wrapping, such as the decorative sheet disclosed in Patent Document 1, a decorative sheet having a desirably smaller thickness, superior molding processability, and designability in terms of exterior appearance or texture (feel), has not been provided so far. Therefore, such a decorative sheet is strongly demanded.

In view of the above problems, an object of the present invention is to provide a decorative sheet that satisfies the requirement for decreased thickness, and ensures superior molding processability, and designability including the exterior appearance, the texture (feel), and the like.

Solution to Problem

In order to achieve the above object, the inventors of the present invention conducted extensive research, and found that the object can be accomplished by the following inventions. Specifically, the present invention provides the following decorative sheets, and the following decorative member produced by using the decorative sheets.
1. A decorative sheet, comprising a base sheet formed of a polyester resin or a polyolefin resin; and an ornamental layer and a surface-protecting layer provided on the base sheet in this order;
the decorative sheet having a total thickness of 70 to 135 $\mu$m, at least the surface-protecting layer having recesses, the maximum depth of each recess being 15 to 100% based on the total thickness and not less than 15 $\mu$m, the ratio of a tensile elastic modulus at 120°C to a tensile elastic modulus at 20°C being 1:12 to 1:160, and the ratio of a maximum point load at 120°C to a maximum point load at 20°C upon 30-mm stretching being 1:1.7 to 1:30.

2. The decorative sheet according to Item 1, wherein the decorative sheet further comprises a resin layer between the base sheet and the surface-protecting layer.

3. The decorative sheet according to Item 1 or 2, wherein the base sheet is formed of a polyolefin resin.

4. The decorative sheet according to Item 2 or 3, wherein the resin layer is formed of a polyolefin resin.

5. The decorative sheet according to any one of Items 1 to 4, wherein the surface-protecting layer is a cured ionizing radiation-curable resin composition.

6. The decorative sheet according to any one of Items 1 to 5, wherein the decorative sheet has the base sheet, the ornamental layer, the resin layer, and the surface-protecting layer in this order, and the resin layer and the surface-protecting layer are transparent.

7. The decorative sheet according to any one of Items 1 to 6, wherein the decorative sheet is used for lamination or wrapping.

8. A decorative member, wherein a surface on the base sheet side of the decorative sheet according to any one of Items 1 to 7 is adhered to an adherend via a adhesive layer.

Advantageous Effects of Invention

The present invention makes it possible to produce a decorative sheet that satisfies the requirement of decreased thickness, and ensures superior molding processability, and designability including the exterior appearance, the texture (feel), and the like.

Brief Description of Drawings

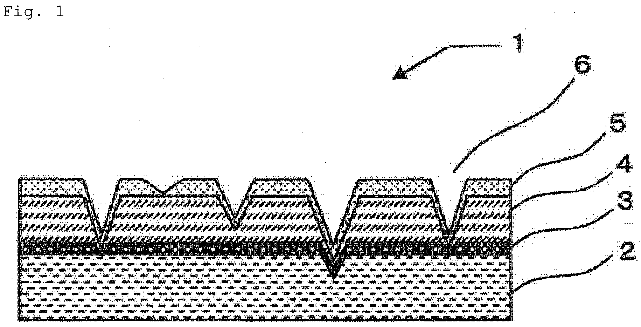

Fig. 1 is a schematic diagram showing a preferable example of the structure of a decorative sheet of the present invention.

Description of Embodiments

The decorative sheet of the present invention comprises a base sheet formed of a polyester resin or a polyolefin resin, and an ornamental layer and a surface-protecting layer provided on the base sheet in this order. The decorative sheet has a total thickness of 70 to 135 $\mu$m. At least the surface-protecting layer has recesses. The maximum depth of each recess is 15 to 100% based on the total thickness and not less than 15 $\mu$m. The ratio of a tensile elastic modulus at 120°C to a tensile elastic modulus at 20°C (which may simply be referred to as a "tensile elastic modulus ratio" hereinafter) is 1:12 to 1:160, and the ratio of a maximum point load at 120°C to a maximum point load at 20°C upon 30-mm stretching (which may simply be referred to as a "maximum point load ratio" hereinafter) is 1:1.7 to 1:30.
The decorative sheet of the present invention is described below in detail by referring to Fig. 1. Fig. 1 shows a preferable example of the structure of a decorative sheet of the present invention. The decorative sheet 1 shown in Fig. 1 has an ornamental layer 3, a resin layer 4, and a surface-protecting layer 5, which are formed in this order on a base sheet 2. The surface-protecting layer 5 has recesses 6. Further, as shown in Fig. 1, the recesses 6 include, for example, those formed within the surface-protecting layer 5 and those formed into the base sheet 2.

First, regarding the characteristics of the decorative sheet of the present invention, the total thickness, the tensile elastic modulus ratio, and the maximum point load ratio are explained below.

The total thickness of the decorative sheet of the present invention must be about 70 to 135 $\mu$m. Although a total thickness of less than 70 $\mu$m is desirable in terms of the required decrease in film thickness, the scratch resistance becomes insufficient, or the ornamental layer may not be sufficiently protected. On the other hand, if the thickness is greater than 135 $\mu$m, detachment (springback) of the decorative sheet from a member occurs upon wrapping, and superior molding processability or designability cannot be ensured. From the same viewpoint, the total thickness is preferably 75 to 125 $\mu$m, and more preferably 90 to 125 $\mu$m.

It is required that the ratio of the tensile elastic modulus at 120°C to the tensile elastic modulus at 20°C of the decorative sheet of the present invention be 1:12 to 1:160. If the tensile elastic modulus ratio is smaller than 1:12 (the tensile elastic modulus at 20°C is smaller), a protrusion, depression, or crack may be generated on the decorative sheet upon the cutting step after wrapping, thereby decreasing the processability (cutting performance). In contrast, if the tensile elastic modulus ratio is greater than 1:160 (the tensile elastic modulus at 20°C is greater), the decorative sheet will become excessively soft when the decorative sheet is heated. This causes a return of the recesses due to heating upon wrapping or other processing steps, thereby decreasing the designability. From the same viewpoint, the tensile elastic modulus ratio is preferably 1:20 to 1:130, more preferably 1:30 to 1:100, and even more preferably 1:30 to 1:75.

The tensile elastic modulus ratio is determined by measuring the tensile elastic modulus at 120°C and the tensile elastic modulus at 20°C, and calculating the ratio of these values. The tensile elastic modulus is calculated according to the following formula based on the first linear part of a stress-strain curve that is obtained by preparing a decorative sheet punched into a dumbbell specimen shape according to JIS K6732, and carrying out a measurement using a tensile and compression testing machine at temperatures of 120°C and 20°C, at a tensile rate of 50 mm/min and an 80-mm distance between chucks.

$$E = \Delta \rho / \Delta \varepsilon$$

E: Tensile Elastic Modulus
$\Delta \rho$: Difference in stress according to an original average cross-sectional area of two points on a straight line
$\Delta \varepsilon$: Difference in strain between the same two points

For the decorative sheet of the present invention, the ratio of a maximum point load at 120°C to the maximum point load at 20°C upon 30-mm stretching must be 1:1.7 to 1:30. If the maximum point load ratio is smaller than 1:1.7 (the maximum point load at 20°C is smaller), a protrusion, depression, or crack may be generated on the decorative sheet upon the cutting step after wrapping, thereby decreasing the processability (cutting performance). Further, with a maximum point load ratio smaller than 1:1.7, the decorative sheet becomes excessively hard, and desirable recesses cannot be formed, thereby decreasing designability. On the other hand, if the maximum point load ratio is greater than 1:30 (the maximum point load at 20°C is greater), the decorative sheet will become excessively soft when the decorative sheet is heated. This causes return of the recesses by heating upon wrapping or other processing steps, thereby decreasing designability. From the same viewpoint, the maximum point load ratio is preferably 1:2.5 to 1:25, and more preferably 1:5 to 1:15.

The maximum point load ratio is determined by measuring the maximum point load at 120°C and the maximum point load at 20°C, and calculating the ratio of these values. The maximum point load is a value obtained by preparing a decorative sheet punched into a dumbbell specimen shape according to JIS K6734, and carrying out a measurement using a tensile/compression testing machine at temperatures of 120°C and 20°C, at a tensile rate of 50 mm/min and an 80-mm distance between chucks.

Base Sheet

Subsequently, the layers constituting the decorative sheet of the present invention are explained below.

The base sheet of the decorative sheet of the present invention is formed of a polyester resin or a polyolefin resin. By using a base sheet made of one of these resins, the tensile elastic modulus ratio and the maximum point load ratio may be set in a predetermined range, thereby ensuring superior molding processability and superior designability.

A wide range of known polyester resins used in related fields may be used as the polyester resin. Examples of polyester resin include polyethylene terephthalate (which may also be referred to as "PET" hereinafter), polybutylene terephthalate, polyethylene naphthalate, polyarylate, polycarbonate, ethylene terephthalate-isophthalate copolymer, and polyarylate. Of these, polyethylene terephthalate and polybutylene terephthalate are preferable, and polyethylene terephthalate is more preferable.

A wide range of known polyolefin resins used in related fields may be used as the polyolefin resin. Examples of polyolefin resins include polyethylene (such as low-density polyethylene, medium-density polyethylene, or high-density polyethylene), polypropylene, polymethylpentene, polybutene, ethylene-propylene copolymers, and propylene-butene copolymers. Of these, polyethylene and polypropylene are preferable. Polyolefin resin is more preferable in that the tensile elastic modulus ratio and the maximum point load ratio may more easily be set within a predetermined range.

The thickness of the base sheet is preferably about 20 to 130 $\mu$m, preferably about 30 to 100 $\mu$m, and more preferably about 40 to 80 $\mu$m. By setting the thickness of the base sheet within this range, the total thickness of the decorative sheet can more easily be adjusted within the specified range of the present invention; further, superior molding processability and superior designability can be ensured.

Further, the base sheet is preferably formed of a colored resin. By using a colored resin, when the member to be adhered to the decorative sheet has an uneven surface hue, it is possible to desirably cover up the surface hue. This ensures more superior designability, and also ensures stability of the color tone of the ornamental layer that is provided according to need.

The colorant used for the above purpose may be suitably selected according to the use. By using a colorant, for example, a transparent color or an opaque color may be added to the base sheet. It is generally necessary to cover up the surface of the member serving as an adherend; therefore, the base sheet preferably has an opaque color. Examples of colorants include inorganic pigments, such as carbon black (India ink), iron black, titanium white, antimony white, chrome yellow, titanium yellow, red iron oxide, cadmium red, ultramarine blue, or cobalt blue; organic pigments or dyes, such as quinacridone red, isoindolinone yellow, or phthalocyanine blue; metallic pigments made of a flaky foil strip of aluminum, brass, or the like; and pearlescent pigments made of a flaky foil strip of titanium dioxide-coated mica, basic lead carbonate, or the like.

The amount of colorant is generally about 1 to 50 parts by mass, based on 100 parts by mass of the resin constituting the base sheet.

Further, so as to, for example, increase the interlayer adhesion between the base sheet and other layers or the bond between the base sheet and various adherends, one or both surfaces of the base sheet may be physically or chemically treated by an oxidation method, an irregularity forming method, or the like.

Examples of oxidation methods include corona discharge treatment, chromium oxidation treatment, flame treatment, hot-air treatment, ozone and ultraviolet treatment, and the like. Examples of irregularity forming methods include sandblasting and solvent treatment. A suitable surface treatment is selected from these methods according to the type of base material. In terms of effect and operability, corona discharge treatment is preferably adopted.

Further, treatments, such as providing a primer layer or a rear primer layer, may be performed in order to reinforce the interlayer adhesion between the base sheet and other layers.

Further, as necessary, an inorganic filler may be added to the base sheet. Examples of inorganic fillers include powders or the like of calcium carbonate, barium sulfate, clay, talc, silica (silicon dioxide), alumina (aluminum oxide), and the like. The amount of inorganic filler is generally about 1 to 50 parts by mass, based on 100 parts by mass of the resin constituting the base sheet.

The base sheet may also contain, as necessary, other additives, for example, a foaming agent, a flame retardant, a lubricant, an antioxidant, a UV absorber, a light stabilizer, and the like.

Ornamental Layer

The ornamental layer in the decorative sheet of the present invention is provided to impart decoration to the decorative sheet of the present invention. The ornamental layer may be an even layer with a uniform color that covers the entire surface of the decorative sheet, a picture layer with various printed patterns formed by using ink and a printer, or a combination of such layers.

Examples of ink to be used for the ornamental layer include those obtained by suitably blending a colorant, such as a pigment or a dye, an extender pigment, a solvent, a stabilizer, a plasticizer, a catalyst, a curing agent and the like with a binder.

The binder is not particularly limited, and thermoplastic resins, and curable resins, such as a one-component curable resin, a two-component curable resin, and the like, may be used. Examples of thermoplastic resins include vinyl chloride/vinyl acetate-based copolymer resins, vinyl chloride/vinyl acetate/acrylic-based copolymer resins, chlorinated polypropylene-based resins, acrylic resins, polyester-based resins, polyamide-based resins, butyral-based resins, polystyrene-based resins, nitrocellulose-based resins, and cellulose acetate-based resins. Examples of thermosetting resins include polyurethane-based resins and acrylic urethane-based resins. An arbitrary resin or resins from these examples may be used alone or in a combination of two or more.

Examples of colorants include inorganic pigments, such as carbon black (India ink), iron black, titanium white, antimony white, chrome yellow, titanium yellow, red iron oxide, cadmium red, ultramarine blue, and cobalt blue; organic pigments or dyes, such as quinacridone red, isoindolinone yellow, and phthalocyanine blue; metallic pigments made of a flaky foil strip of aluminum, brass, or the like; and pearlescent pigments made of a flaky foil strip of titanium dioxide-coated mica, or basic lead carbonate.

When the ornamental layer has a picture or a pattern thereon, examples of patterns include wood grain patterns, stone grain patterns imitating a rock surface, such as marble patterns (for example, a travertine marble pattern), textile patterns imitating a cloth grain or a cloth-like pattern, tile patterns, and brick patterns. Examples also include combinations of the above patterns, such as marquetry or patchwork. These patterns are formed by multicolor printing using general process colors, i.e., yellow, red, blue, and black; or by multicolor printing with spot colors that is performed by using plates for the respective colors constituting the pattern. Because the present invention enables the expression of a texture (feel) by forming recesses, which are described later, wood grain patterns are suitable in view of obtaining a realistic texture.

The thickness of the ornamental layer may be suitably selected according to the desired picture or pattern, and is generally about 1 to 20 $\mu$m, and preferably about 1 to 10 $\mu$m.

Resin Layer

The resin layer in the decorative sheet of the present invention is preferably provided as necessary in view of protecting the ornamental layer of the decorative sheet; improving the molding processability by adjusting the total thickness, the tensile elastic modulus, and the maximum point load of the decorative sheet; and improving scratch resistance.

Preferable examples of the resin for constituting the resin layer include acrylic resin, polycarbonate resin, polyurethane resin, polystyrene resin, vinyl chloride resin, and vinyl acetate resin, in addition to the polyester resin and the polyolefin resin used as the base sheet. In view of improving the molding processability and scratch resistance, polyester resin and polyolefin resin are preferable, and polyolefin resin is more preferable. Further, from the same viewpoint, the resin for constituting the base sheet and the resin for constituting the resin layer are both preferably polyolefin resins.

The resin layer is provided at an arbitrary position between the base sheet and the surface-protecting layer. In view of protecting the ornamental layer, the resin layer is preferably provided between the ornamental layer and the surface-protecting layer.

The resin layer may be transparent or nontransparent. When the resin layer is provided between the ornamental layer and the surface-protecting layer, in view of clearer visibility of the ornamental layer, the resin layer is preferably transparent. The term "transparent" used herein means colorless transparent, colored transparent, and semitransparent. Further, when a colored resin layer is used, the colorant is preferably a colorant similar to those used for the base sheet.

The thickness of the resin layer is preferably about 10 to 110 $\mu$m, more preferably about 20 to 90 $\mu$m, and even more preferably about 30 to 80 $\mu$m. By specifying the thickness of the resin layer to be in the above ranges, the total thickness of the decorative sheet can be more easily adjusted within a range specified in the present invention, thereby ensuring protection of the ornamental layer, improvement in the molding processability by adjusting the total thickness, the tensile elastic modulus, and the maximum point load of the decorative sheet, and improvement in the scratch resistance.

Further, in view of protecting the ornamental layer and ensuring excellent scratch resistance, the thickness of the resin layer is preferably larger than that of the base sheet.

Further, in order to improve the adhesiveness between the resin layer and other layers of the decorative sheet of the present invention, a physical or chemical surface treatment, such as an oxidation method or an irregularity forming method, may be performed on one or both surfaces of the resin layer. Preferable examples of physical or chemical surface treatments include methods similar to those to be used for the surface treatment of the base sheet described above.

Surface-Protecting Layer

The decorative sheet of the present invention is provided with a surface-protecting layer for imparting surface characteristics, including scratch resistance, abrasion resistance, chemical resistance, and the like. The surface-protecting layer is provided directly on the ornamental layer, or via another layer, for example, the resin layer described above. The surface-protecting layer is preferably constituted of a layer obtained by applying a resin composition containing a curable resin, and curing the composition. With this surface-protecting layer formed by curing a curable resin, it is possible to improve the surface characteristics of the decorative sheet.

Preferable examples of curable resins used to form the surface-protecting layer include thermosetting resins, such as a two-component curable resin, and an ionizing radiation-curable resin. The curable resin may be a hybrid-type resin including a plurality of different kinds of resin. In this case, for example, an ionizing radiation-curable resin and a thermosetting resin may be used together.

Of these, in view of increasing the crosslinking density of the resin constituting the surface-protecting layer, and improving the scratch resistance or the abrasion resistance of the layer surface, ionizing radiation-curable resins are preferable. Electron-beam-curable resins are more preferable, because it can be applied without using a solvent and it can be easily handled.

Ionizing Radiation-Curable Resin

An ionizing radiation-curable resin refers to a resin that is crosslinked or cured when it is exposed to a kind of electromagnetic wave or charged particle radiation having an energy quantum that enables crosslinking or polymerization of the molecules, such as an ultraviolet ray or electron beam. More specifically, a suitable ionizing radiation-curable resin may be selected from conventional ionizing radiation-curable resins, including polymerizable monomers, polymerizable oligomers and prepolymers.

Typical preferable examples include, as polymerizable monomers, (meth)acrylate-based monomers having a radical polymerizable unsaturated group in the molecule. Among them, multifunctional (meth)acrylates are more preferable. In the present specification, the term "(meth)acrylate" means "acrylate or methacrylate." This applies also to other similar terms. Any (meth)acrylates having two or more ethylenically unsaturated bonds in the molecule may be used as the multifunctional (meth)acrylate. The number of ethylenically unsaturated bonds is not particularly limited. These multifunctional (meth)acrylates may be used alone or in a combination of two or more.

Examples of polymerizable oligomers include oligomers having a radical polymerizable unsaturated group in the molecule, such as epoxy(meth)acrylate-based oligomers, urethane (meth)acrylate-based oligomers, polyester (meth)acrylate-based oligomers, and polyether (meth)acrylate-based oligomers.

Further, other examples of polymerizable oligomers include highly hydrophobic polybutadiene (meth)acrylate-based oligomers in which a (meth)acrylate group is attached to the side chain of a polybutadiene oligomer; silicone (meth)acrylate-based oligomers having a polysiloxane bond in the main chain; aminoplast resin (meth)acrylate-based oligomers obtained by modifying an aminoplast resin having many reactive groups in a small molecule; and oligomers having a cationic polymerizable functional group in the molecule, such as novolac-type epoxy resins, bisphenol-type epoxy resins, aliphatic vinyl ethers, or aromatic vinyl ethers.

In the present invention, a monofunctional (meth)acrylate may suitably be used together with a multifunctional (meth)acrylate or the like, so as to decrease viscosity, insofar as the object of the present invention is not impaired. The monofunctional (meth) acrylate may be used alone or in a combination of two or more kinds.

The thickness of the surface-protecting layer is preferably about 2 to 20 $\mu$m, and more preferably about 2 to 10 $\mu$m, in view of ensuring surface characteristics including superior scratch resistance and its sustainability, as well as abrasion resistance, chemical resistance, and the like.

The resin composition constituting the surface-protecting layer may contain various additives other than those mentioned above, insofar as the performance is not impaired. Examples of additives include polymerization inhibitors, crosslinking agents, antistatic agents, adhesiveness improvers, antioxidants, leveling agents, thixotropy imparting agents, coupling agents, plasticizers, antifoaming agents, fillers, and solvents.

Recesses

The surface-protecting layer has recesses. With the recesses, the decorative sheet of the present invention has, in particular, a superior texture (feel). The recesses are present at least in the surface-protecting layer. As shown in Fig. 1, the recesses include those formed within the surface-protecting layer, and those formed into the base sheet. In view of obtaining a superior texture (feel), it is preferable to provide not only the recesses formed within the surface-protecting layer, but a combination of the recesses formed within the surface-protecting layer with those formed into the resin layer, those formed into the ornamental layer, or those formed into the base sheet.

The maximum depth of each recess must be not less than 15 $\mu$m, and must be 15 to 100% based on the total thickness of the decorative sheet. With such a maximum depth, it is possible to prevent fracture of the decorative sheet in the process of embossing, and also prevent the case where the finished recesses are squashed. As a result, a superior texture (feel) can be ensured, thereby ensuring superior designability. From the same viewpoint, the maximum depth of the recesses is preferably 15 to 80%, more preferably 25 to 80%. Further, the lower limit of the maximum depth is preferably not less than 20 $\mu$m, and more preferably not less than 30 $\mu$m. When the maximum depth of the recesses is 100% based on the total thickness of the decorative sheet, protrusions appear in the rear surface of the decorative sheet.

The maximum depth of the recesses was measured as follows. For thirty arbitrary recesses, the height from the lowest point of each recess to the surface of the surface-protecting layer was measured using a surface roughness shape measurement device under the following conditions: cutoff value: 2.50 mm, type of cutoff filter: 2RC, inclination correcting method: linear. The largest depth was determined as the maximum depth.

The method for forming the recesses in the surface-protecting layer is not particularly limited. For example, considering working ease, embossing is preferred. The embossing may be performed by a general method using a known sheet-fed type or rotary embossing device.

Adhesive Layer

The decorative sheet of the present invention may have an adhesive layer as required. In particular, when the decorative sheet of the present invention has a resin layer, it is effective to provide an adhesive layer for improving the adhesiveness between the resin layer and the ornamental layer. An adhesive generally used for a decorative sheet may be used to form an adhesive layer. The thickness of the adhesive layer is preferably about 0.1 to 50 $\mu$m, and more preferably 1 to 30 $\mu$m in view of ensuring sufficient adhesiveness.

The adhesive is not particularly limited, and examples include polyurethane-based adhesives, acrylic adhesives, epoxy-based adhesives, and rubber-based adhesives. Of these, polyurethane-based adhesives are preferable in terms of adhesion strength. Examples of polyurethane-based adhesives include two-component curable urethane resin-based adhesives. The two-component curable urethane resin-based adhesive is produced by using a two-component curable urethane resin including a hydroxy-containing compound, such as polyether polyol, polyester polyol, or acrylic polyol, and various polyisocyanate compounds, such as tolylene diisocyanate, or hexamethylene diisocyanate.

Further, acrylic-polyester-vinyl chloride vinyl acetate-based resin and the like may also be used as suitable adhesives since they easily exhibit adhesiveness by heating, and maintain the adhesion strength even in the use under high temperatures.

The adhesive layer may be formed by a known layer-forming method, such as a coating method, using adhesive compositions made of the above resins.

Primer Layer

As required, the decorative sheet of the present invention may be provided with a primer layer between two arbitrary layers so as to improve interlayer adhesion. In particular, it is effective to provide a primer layer between the surface-protecting layer and another layer, for example, when a resin layer is provided, between the surface-protecting layer and the resin layer, in view of ensuring superior scratch resistance for the decorative sheet of the present invention.

The primer layer is transparent or semitransparent. The primer layer may be formed, for example, from a binder resin similar to that used for the ornamental layer described above. The thickness of the primer layer is preferably about 0.5 to 20 $\mu$m, and more preferably in a range of 1 to 5 $\mu$m.

Method for Producing Decorative Sheet

As a method for producing the decorative sheet of the present invention, a method for producing a decorative sheet having a base sheet, an ornamental layer, a resin layer, and a surface-protecting layer, which are formed in this order, is described below; this decorative sheet is one of preferable embodiments of the decorative sheet of the present invention. The decorative sheet of the present invention is produced, for example, by successively performing Step (1) of providing an ornamental layer on a base sheet, Step (2) of providing a resin layer on the ornamental layer, and Step (3) of applying a curable resin composition onto the resin layer and curing the resin composition, thereby forming a surface-protecting layer, in this order.

First, Step (1) is a step of providing an ornamental layer on a base sheet. The ornamental layer is provided by forming a desired color layer or picture layer by applying ink to be used for the ornamental layer onto the base sheet. The application of ink may be performed by known coating methods, such as gravure printing, bar coating, roll coating, reverse roll coating, comma coating or the like. The application of ink is preferably performed by gravure printing.

Further, when a surface treatment is performed on the base sheet, the treatment may be performed before the application of the ink used for the ornamental layer. An example of a surface treatment is providing a primer layer on the front surface or rear surface of the base sheet. When a primer layer is provided on the front surface of the base sheet , i.e., between the base sheet and the ornamental layer, the primer layer is formed before the application of the ink used for the ornamental layer. When a primer layer is provided as a rear primer layer on the rear surface of the base sheet, i.e., on the side opposite to the side on which the ornamental layer is provided, the primer layer may be formed before the application of the ink used for the ornamental layer, or upon the application of the ink used for the ornamental layer. The primer layer may be formed by applying a resin composition for forming the primer layer using a known coating method, for example, gravure printing, bar coating, roll coating, reverse roll coating, or comma coating.

Step (2) is a step of providing a resin layer on the ornamental layer. The resin layer may be formed after an adhesive is applied as necessary onto the base sheet on which the ornamental layer was formed, by using a resin composition for forming a resin layer. More specifically, the resin layer may be bonded or pressure-bonded onto the ornamental layer by extrusion lamination, dry lamination, wet lamination, thermal lamination, or the like.

Step (3) is a step of applying a curable resin composition on the resin layer, and curing the resin, thereby forming a surface-protecting layer. The surface-protecting layer is obtained by applying an ionizing radiation-curable resin composition, which contains an ionizing radiation-curable resin, on the resin layer or on the primer layer formed as necessary on the resin layer, and curing the composition.

The application of the resin composition for forming the surface-protecting layer may be performed by a known method, such as gravure coating, bar coating, roll coating, reverse roll coating, comma coating, or the like, in a manner such that the thickness after the curing of the composition becomes generally about 1 to 20 $\mu$m. Among these methods, gravure coating is preferable.

When an ionizing radiation-curable resin composition is used to form a surface-protecting layer, the uncured resin layer formed by applying the resin composition is irradiated with an ionizing radial ray, such as an electron beam or ultraviolet ray; as a result, the resin layer undergoes crosslinking and curing, thereby forming a surface-protecting layer. When an electron beam is used as an ionizing radial ray, its accelerating voltage may be suitably selected according to the resin used or the thickness of the layer. Generally, it is preferable to cure the uncured resin layer at an accelerating voltage of about 70 to 300 kV.

The amount of radiation is preferably set to a value at which the crosslinking density of the ionizing radiation-curable resin is saturated. The amount of radiation is generally 5 to 300 kGy (0.5 to 30 Mrad), and preferably 10 to 50 kGy (1 to 5 Mrad).

There is no particular limitation to the electron beam sources, and various types of electron beam accelerators, such as Cockcroft-Walton accelerators, Van de Graaff accelerators, resonant transformer-type accelerators, insulated core transformer-type accelerators, linear accelerators, Dynamitron accelerators, or high frequency-type accelerators, may be used.

When ultraviolet rays are used for ionizing radiation, an ultraviolet ray having a wavelength of 190 to 380 nm is used. Usable examples of ultraviolet ray sources include, but not limited to, high-pressure mercury lamps, low-pressure mercury lamps, metal halide lamps, and carbon arc lamps.

Further, when a thermosetting resin composition is used to form a surface-protecting layer, a heat treatment suitable for the thermosetting resin composition is performed to cure the resin composition, thereby forming a surface-protecting layer.

The decorative sheet of the present invention makes it possible to satisfy the requirement for decreased thickness, and to ensure superior molding processability and designability including the exterior appearance (including the finished state) and the texture (feel). Further, since the decorative sheet of the present invention ensures, in particular, superior thermal characteristics and mechanical characteristics (strength), the decorative sheet of the present invention will not be detached from a member, and also does not break, crack, or wrinkle even at a processing step under severe conditions, such as a thermal or vacuum environment, as used in lamination, wrapping, vacuum forming, or the like. With such characteristics, the decorative sheet of the present invention has superior molding processability, and, as a result, ensures superior designability when the decorative sheet is adhered to a member. Therefore, the decorative sheet of the present invention is suitably used for lamination, wrapping, or vacuum forming.

Decorative Member

The decorative member of the present invention is obtained by adhering the above decorative sheet of the present invention to a member (adherend) by lamination, wrapping, vacuum forming or the like, and, as necessary, finishing the resulting lamination. The adherend is adhered to the base sheet side of the decorative sheet via an adhesive layer.

Examples of adherends include a flat board, a curved board, and like boards of various materials; three-dimensional articles; and sheets (or films). Examples of board materials include wooden single plates, wooden plyboards, and wooden fiber board materials, such as particleboards or MDF (medium density fiber board materials); board materials of iron, aluminum, or the like; board materials of glass or ceramics such as or pottery; non-cement ceramic materials, such as plaster, non-pottery ceramic board materials, such as ALC (autoclaved lightweight aerated concrete) boards; and board materials of acrylic resin, polyester resin, polystyrene resin, or polyolefin resin, such as polypropylene, ABS (acrylonitrile-butadiene-styrene copolymer) resin, phenol resin, vinyl chloride resin, cellulose-based resin, or rubber. Examples of materials of three-dimensional articles or sheets include wooden board materials similar to those listed above, metal materials similar to those listed above, ceramic materials similar to those mentioned above, and resin materials similar to those listed above.

The adhesive to be used for the adhesive layer for adhering the decorative sheet to an adherend is not particularly limited, and known adhesives may be used. For example, heat-sensitive adhesives, and pressure-sensitive adhesives may be preferably used. As the resin to be used for the adhesive constituting the adhesive layer, for example, at least one member selected from the group consisting of acrylic resins, polyurethane-based resins, vinyl chloride-based resins, vinyl acetate-based resins, vinyl chloride-vinyl acetate copolymer, styrene-acrylic copolymer, polyester-based resins, and polyamide-based resins, is used. It is also possible to use a two-component curable polyurethane-based adhesive containing isocyanate as a curing agent or a polyester-based adhesive.

The adhesive layer may contain a viscous agent. A suitable viscous agent is selected from acrylic viscous agents, urethane-based viscous agents, silicone-based viscous agents, and rubber-based viscous agents.

The adhesive layer may be formed by applying the above resin in an applicable form, such as a solution-form or an emulsion-form, by gravure printing, screen printing, reverse coating using a photogravure plate, or the like, and then drying the resin.

The thickness of the adhesive layer is not particularly limited, and is preferably about 1 to 100 $\mu$m. With such a thickness, the adhesive layer ensures superior adhesiveness.

Further, examples of the method for adhering the decorative sheet to an adherend include a lamination method in which the decorative sheet is laminated on a board-shaped adherend via an adhesive by applying pressure using a pressure roller; wrapping in which decorative sheets are sequentially supplied with an intervening adhesive and are sequentially pressured-bonded to multiple sides of an adherend using a plurality of differently-oriented rollers, thereby forming a lamination; and vacuum forming in which a decorative sheet secured to a fixed frame is heated via a silicone rubber sheet using a heater to a predetermined temperature at which the decorative sheet is softened, and a vacuum forming die is pressed into the heated and softened decorative sheet while sucking air from the vacuum forming die with a vacuum pump or the like, thereby tightly attaching the decorative sheet into the vacuum forming die.

When a hot-melt adhesive (heat-sensitive adhesive) is used for lamination or wrapping, the heating temperature varies depending on the type of resin constituting the adhesive; however, the heating temperature is generally about 160 to 200°C. For a reactive hot-melt adhesive, the heating temperature is about 100 to 130°C. Further, since vacuum forming is generally performed under heat, the heating temperature is generally about 80 to 130°C, and preferably about 90 to 120°C.

The decorative member thus obtained may be cut at an arbitrary portion and may be provided with an arbitrary decoration, such as grooving or chamfering, on the surface or the butt end portion using a cutting tool, such as a router or a cutter. The decorative member may be used for various purposes, for example, an architectural interior or exterior member, such as a wall, a ceiling, or a floor; an architectural fitting, such as a window frame, a door, a handrail, a baseboard, a cornice, or a molding; a surface decorative board material to be used cabinets for kitchens, furniture, light electrical appliances, office automation equipment, or the like; or the interior, exterior or the like of a vehicle.

Examples

The present invention is explained in detail below with reference to Examples. However, the present invention is not limited to these Examples.

- Evaluation Method

(1) Processing Suitability (Wrapping Property)

The conditions of the decorative members obtained in the Examples and Comparative Examples were observed by visual inspection, and evaluated based on the following criteria.

A: No change in exterior appearance was observed.
B: A slight detachment was observed between the adherend and the decorative sheet.
C: Springback, i.e., removal of the decorative sheet from the adherend was observed, or the wrapping (adhesion) failed.

(2) Processing Suitability (Cutting Performance)

The decorative members obtained in the Examples and Comparative Examples were cut with a router, and the conditions of the finished surfaces after the cutting were observed by visual inspection, and evaluated based on the following criteria.

A: Little change in exterior appearance was observed.
B: A slight protrusion, depression, crack, or the like was observed, but at an acceptable level for practical use.

C: A significant protrusion, depression, crack or the like was observed.

(3) Designability

The exterior appearances (recesses) of the decorative members obtained in the Examples and Comparative Examples were observed by visual inspection, and evaluated based on the following criteria.

A: The recesses were retained and the texture (feel) was excellent; thus the designability was superior.
B: Although some recesses were slightly shallow, the texture (feel) was perceivable; thus the designability was at an acceptable level for practical use.
B-: Although some recesses were shallow, the texture (feel) remained; thus the designability was at an acceptable level for practical use.
C: The recesses were entirely shallow or lost; thus the texture (feel) was lost.

(4) Scratch Resistance

The pencil hardness for each decorative member obtained in the Examples and Comparative Examples was measured according to JIS K5600-5-4 using a pencil scratch coating layer hardness tester (PSH540-40IP (Model No.), Toyo Seiki Seisaku-sho), and a pencil for the pencil scratch value test (Mitsubishi Pencil Co., Ltd.). The measured hardness was evaluated based on the following criteria.

A: Breaking of the decorative sheet occurred at a pencil hardness of HB or more.
B: Breaking of the decorative sheet occurred at a pencil hardness of 3B to B.
C: Breaking of the decorative sheet occurred at a pencil hardness of 4B or less.

Example 1

A printing ink containing a two-component curable acrylic-urethane resin as a binder was applied to one surface of a base sheet, which was a polypropylene resin sheet (thickness: 50 $\mu$m) treated with a two-sided corona discharge, by gravure printing, thereby providing an ornamental layer (thickness: 2 $\mu$m) having a wood grain pattern. A two-component curable urethane-nitrocellulose-mixed resin composition was applied to the other surface of the base sheet, thereby forming a rear primer layer (thickness: 2 $\mu$m). A transparent polyurethane resin-based adhesive was applied to the ornamental layer to form an adhesive layer (thickness after drying: 3 $\mu$m). Then, a resin layer (thickness: 19 $\mu$m) was formed by thermal melt extrusion of a transparent polypropylene resin using a T-die extruder in a manner such that the decorative sheet had the total thickness (80 $\mu$m) shown in Table 1.
Subsequently, after a corona discharge treatment was applied to the surface of the resin layer, a two-component curable acrylic-urethane resin composition was applied by gravure printing to form a primer layer (thickness after drying: 1 $\mu$m) ; further, a transparent electron-beam-curable resin composition (electron-beam-curable resin: trifunctional urethane acrylate) was applied (solids content: 3 g/m$^2$) by roll coating, and the composition was dried to form an uncured resin layer. The uncured resin layer was then cured by irradiation of an electron beam (pressure application voltage: 125 KeV, 5 Mrad) at an oxygen concentration of 200 ppm, thereby obtaining a surface-protecting layer (thickness: 3 $\mu$m). Thereafter, embossing was performed with respect to the surface-protecting layer side of the sheet, thereby forming an irregular wood vessel pattern having recesses with a maximum depth of 50 $\mu$m. The decorative sheet of Example 1 was thus obtained.
A polyurethane-based heat-sensitive adhesive (hot-melt adhesive, "PUR704 (Model No.)," Kleiberit Japan) was applied to the rear primer layer side of the obtained decorative sheet to form an adhesive layer (thickness: 20 $\mu$m). Before the adhesive was solidified, the decorative sheet was deformed according to the shape of a vinyl chloride adherend having an L-shaped cross-section, thereby bonding the adherend and the decorative sheet together to produce a decorative member. The above evaluations were performed for the produced decorative member. Table 1 shows the results.

Examples 2 to 10

Decorative sheets of Examples 2 to 10, and decorative members having these decorative sheets, were produced in a manner similar to that of Example 1, except that the thickness of the resin layer was changed so that the decorative sheet had the total thickness specified in Table 1, and/or the material of the base sheet was changed so that the decorative sheet had the tensile elastic modulus ratio or the maximum point load ratio specified in Table 1. The above evaluations were performed for the produced decorative members. Table 1 shows the results.

Example 11

A decorative sheet of Example 11, and a decorative member having the decorative sheet, were produced in a manner similar to that of Example 1, except that a sheet made of a polyethylene terephthalate resin was used as the base sheet (thickness: 70 $\mu$m), and the adhesive layer and the resin layer were not provided. The above evaluations were performed for the produced decorative member. Table 1 shows the results.

Comparative Examples 1 to 6

Decorative sheets of Comparative Examples 1 to 6, and decorative members having these decorative sheets, were produced in a manner similar to that of Example 1, except that the thickness of the resin layer was changed so that the decorative sheet had the total thickness specified in Table 1, and/or the material of the base sheet was changed so that the decorative sheet had the tensile elastic modulus ratio or the maximum point load ratio specified in Table 1. The above evaluations were performed for the produced decorative members. Table 1 shows the results.

Comparative Example 7

A decorative sheet of Comparative Example 7, and a decorative member having the decorative sheet, were produced in a manner similar to that of Example 11, except that the polyethylene terephthalate resin constituting the base sheet was changed so that the decorative sheet had the maximum point load ratio specified in Table 1. The above evaluations were performed for the produced decorative member. Table 1 shows the results.

Table 1

| | Decorative Sheet | | | | Processability | | Designability | Scratch resistance |
|---|---|---|---|---|---|---|---|---|
| | Thickness | Tensile elastic modulus ratio | Maximum point load ratio | Depth of embossing | Wrapping property | Cutting Performance | | |
| Example 1 | 80 | 1:50 | 1:10 | 50 | A | A | A | B |
| Example 2 | 100 | 1:50 | 1:10 | 50 | A | A | A | A |
| Example 3 | 120 | 1:50 | 1:10 | 50 | A | A | A | A |
| Example 4 | 130 | 1:50 | 1:10 | 50 | B | A | A | A |
| Example 5 | 100 | 1:15 | 1:10 | 50 | A | B | A | A |
| Example 6 | 100 | 1:150 | 1:10 | 50 | A | A | B | A |
| Example 7 | 100 | 1:50 | 1:20 | 50 | A | A | B | A |
| Example 8 | 100 | 1:50 | 1:30 | 50 | A | A | B- | A |
| Example 9 | 100 | 1:50 | 1:10 | 100 | B | A | B | A |
| Example 10 | 100 | 1:50 | 1:10 | 20 | A | A | B | A |
| Example 11 | 78 | 1:15 | 1:2 | 50 | A | B | B | A |
| Comparative Example 1 | 60 | 1:50 | 1:10 | 50 | A | A | A | C |
| Comparative Example 2 | 140 | 1:50 | 1:10 | 50 | C | A | A | A |
| Comparative Example 3 | 100 | 1:10 | 1:10 | 50 | A | C | A | A |
| Comparative Example 4 | 100 | 1:170 | 1:10 | 50 | A | A | C | A |
| Comparative Example 5 | 100 | 1:50 | 1:10 | 120 | C | A | C | A |
| Comparative Example 6 | 100 | 1:50 | 1:10 | 10 | A | A | C | A |
| Comparative Example 7 | 80 | 1:15 | 1:1.5 | 50 | A | C | B | A |

Industrial Applicability

The decorative sheet of the present invention satisfies the requirement for decreased thickness, and ensure superior molding processability, and designability including exterior appearance (including the finished state) and texture (feel). Since the decorative sheet of the present invention ensures, in particular, superior thermal characteristics and mechanical characteristics (strength), the decorative sheet of the present invention ensures superior molding processability even at a processing step under severe conditions, such as a thermal or vacuum environment as in lamination, wrapping, vacuum forming, or the like. Thus, the decorative sheet of the present invention ensures superior designability when the decorative sheet is adhered to a member. With such characteristics, the decorative sheet of the present invention may be used for various purposes, for example, an architectural interior or exterior member, such as a wall, a ceiling, or a floor; an architectural fitting, such as a window frame, a door, a handrail, a baseboard, a cornice, or a molding; a surface decorative board material to be used for cabinets for kitchens, furniture, light electrical appliances, office automation equipment or the like; or the interior, exterior, or the like, for vehicles.

Reference Numerals

1.  Decorative sheet
2.  Base sheet
3.  Ornamental layer
4.  Resin layer
5.  Bonding layer
6.  Surface-protecting layer
7.  Recess

**Claims**

1.  A decorative sheet, comprising a base sheet formed of a polyester resin or a polyolefin resin; and an ornamental layer and a surface-protecting layer provided on the base sheet in this order;
    the decorative sheet having a total thickness of 70 to 135 $\mu$m, at least the surface-protecting layer having recesses, the maximum depth of each recess being 15 to 100% based on the total thickness and not less than 15 $\mu$m, the ratio of a tensile elastic modulus at 120°C to a tensile elastic modulus at 20°C being 1:12 to 1:160, and the ratio of a maximum point load at 120°C to a maximum point load at 20°C upon 30-mm stretching being 1:1.7 to 1:30.

2.  The decorative sheet according to Claim 1, wherein the decorative sheet further comprises a resin layer between the base sheet and the surface-protecting layer.

3.  The decorative sheet according to Claim 1 or 2, wherein the base sheet is formed of a polyolefin resin.

4.  The decorative sheet according to Claim 2 or 3, wherein the resin layer is formed of a polyolefin resin.

5.  The decorative sheet according to any one of Claims 1 to 4, wherein the surface-protecting layer is a cured ionizing radiation-curable resin composition.

6.  The decorative sheet according to any one of Claims 1 to 5, wherein the decorative sheet has the base sheet, the ornamental layer, the resin layer, and the surface-protecting layer in this order, and the resin layer and the surface-protecting layer are transparent.

7.  The decorative sheet according to any one of Claims 1 to 6, wherein the decorative sheet is used for lamination or wrapping.

8.  A decorative member, wherein a surface on the base sheet side of the decorative sheet according to any one of Claims 1 to 7 is adhered to an adherend via an adhesive layer.

Fig. 1

## INTERNATIONAL SEARCH REPORT

International application No.

PCT/JP2015/057827

A. CLASSIFICATION OF SUBJECT MATTER

*B32B27/32*(2006.01)i, *B32B3/30*(2006.01)i, *B32B27/36*(2006.01)i, *B32B33/00* (2006.01)i, *E04F13/07*(2006.01)i

According to International Patent Classification (IPC) or to both national classification and IPC

B. FIELDS SEARCHED

Minimum documentation searched (classification system followed by classification symbols)
B32B1/00-43/00, E04F13/02-13/26, E04F15/00-15/22

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-123536 A (Dainippon Printing Co., Ltd.),<br>18 May 2006 (18.05.2006),<br>entire text<br>& WO 2006/035945 A1     & KR 10-2007-0065409 A<br>& CN 101031418 A | 1-8 |
| A | JP 2004-17617 A (Toppan Printing Co., Ltd.),<br>22 January 2004 (22.01.2004),<br>entire text; all drawings<br>(Family: none) | 1-8 |
| A | JP 2010-228322 A (Dainippon Printing Co., Ltd.),<br>14 October 2010 (14.10.2010),<br>entire text; all drawings<br>(Family: none) | 1-8 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 June 2015 (04.06.15) | 16 June 2015 (16.06.15) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (July 2009)

**INTERNATIONAL SEARCH REPORT**

| International application No. |
|---|
| PCT/JP2015/057827 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2010-71004 A  (Dainippon Printing Co., Ltd.), 02 April 2010 (02.04.2010), entire text; all drawings (Family: none) | 1-8 |
| A | JP 2010-100030 A  (Dainippon Printing Co., Ltd.), 06 May 2010 (06.05.2010), entire text; all drawings (Family: none) | 1-8 |
| A | JP 2005-335336 A  (Dainippon Printing Co., Ltd.), 08 December 2005 (08.12.2005), entire text; all drawings (Family: none) | 1-8 |
| A | JP 2005-289038 A  (Sekisui Chemical Co., Ltd.), 20 October 2005 (20.10.2005), entire text (Family: none) | 1-8 |
| A | JP 2003-53918 A  (Chisso Corp.), 26 February 2003 (26.02.2003), entire text; all drawings (Family: none) | 1-8 |
| A | JP 2010-89359 A  (Kaneka Corp.), 22 April 2010 (22.04.2010), entire text; all drawings (Family: none) | 1-8 |
| A | JP 2001-219524 A  (NISSHA Printing Co., Ltd.), 14 August 2001 (14.08.2001), entire text; all drawings (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000326451 A